# EUROPEAN PATENT APPLICATION

(11) **EP 3 849 092 A1**
(43) Date of publication of application: **14.07.2021**
(21) Application number: 20150827.2
(22) Date of filing: 09.01.2020
(51) Int. Cl.: H04B 1/38, H04B 1/3822, H04B 1/3827, B60R 11/00

(54) **RADIO COMMUNICATION SYSTEM AND METHOD FOR OPERATING A MOBILE RADIO IN A VEHICLE COMMUNICATION ARRANGEMENT**

(71) Applicant: Rohde & Schwarz GmbH & Co. KG, 81671 München (DE)
(72) Inventor: WENZEL, Dietmar, 81549 München (DE)
(74) Representative: Isarpatent

(57) **Abstract**

A radio communication system for a vehicle I s provided. A local vehicle communication arrangement of a vehicle may be expanded by including a mobile radio. For this purpose, a mounting device is provided, which can easily receive the mobile radio. The mounting device couples a mobile radio with the local vehicle communication arrangement. In this way, the vehicle communication arrangement as a whole can use the features and the communication capability of the mobile radio.

## Description

### TECHNICAL FIELD

The present invention relates to a radio communication system. The present invention further relates to a method for operating a mobile radio in a vehicle communication arrangement.

### BACKGROUND

Although applicable in principle to any wireless communication system, the present invention and its underlying problem will be hereinafter described in combination with a tactical communication system.

Some vehicles, in particular tactical vehicles, may comprise a local communication arrangement. This communication arrangement may provide communication capabilities between multiple users, in particulars users inside the vehicle or in a short distance from the vehicle.

Further to this, the individual users may perform communications over longer distances. For this purpose, each user requires a separate radio for a long distance communication. Accordingly, separate devices are required for a short distance communication within a range of the vehicle and a long distance communication by means of an additional radio.

Against this background, a problem, which may be solved by the present invention is to provide a versatile communication system for a vehicle, which can provide both, short distance communication and long distance communication.

### SUMMARY

The present invention solves this problem by a radio communication system and a method for operating a mobile radio in a vehicle communication arrangement with the features of the independent claims. Further advantageous embodiments are subject-matter of the dependent claims.

According to a first aspect, a radio communication system for a vehicle is provided. The radio communication system comprises a vehicle communication arrangement and a mounting device. The vehicle communication arrangement is configured to provide communications inside the vehicle or in a proximity of the vehicle. The communications may comprise voice communications and/or data communications. The mounting device is configured to receive and fasten a mobile radio. The mounting device comprises a connecting device. The connecting device is configured to electrically couple the mobile radio with the vehicle communication arrangement.

According to a further aspect, a method for operating a mobile radio in a vehicle communication arrangement is provided. The method comprises a step of receiving the mobile radio in a mounting device. Further, the method comprises a step of electrically connecting the mobile radio with the vehicle communication arrangement. In a further step, the mobile radio is operated by the vehicle communication arrangement.

The present invention is based on the finding that some vehicles, in particular some tactical vehicles, may provide a communication arrangement for local communications. However, the individual users may also require additional devices for communications over longer distances. For this purpose, each user has to use its own, separate radio for long distance communications. Further, it might be possible to firmly install a further communication device for long distance communications to the communication arrangement of the vehicle.

However, adding a firmly installed communication device into each vehicle may require high costs. Further to this, it is difficult to modify the properties of a firmly installed communication device in order to change or add some features of such a communication device. Consequently, changing features or adding further features to a firmly installed communication device might be a complex and costly operation.

Additionally, the use of a firmly installed communication device in a vehicle is limited to operations inside the vehicle. However, if a user moves away from the vehicle, the user may be no longer able to use the features of the firmly installed communication device.

Thus, the present invention takes into account this finding and aims to provide a more flexible and versatile communication system for a vehicle, which provides both, the benefits of a communication system arranged in the vehicle and flexibility of a mobile radio, in particular a portable or handheld radio.

For this purpose, a radio communication system is provided, which combines the elements of a firmly installed vehicle communication system and a mobile, portable or handheld radio. For this purpose, a mounting device is provided for coupling the mobile radio with the firmly installed components of the vehicle communication arrangement. In this way, only a single mobile radio is required for providing long distances communications. The capabilities of this single radio can be used by all users of the vehicle communication arrangement. Thus, the individual users of the vehicle communication arrangement do not need individual radios. Moreover, the common mobile radio may be used by means of the elements of the vehicle communication arrangement.

Since the mobile radio can be easily coupled with the vehicle communication arrangement by means of a mounting device, it is possible to couple the mobile radio with the vehicle communication arrangement in a very simple and quick manner. Moreover, by coupling the mobile radio with the vehicle communication arrangement, the vehicle communication arrangement may use the additional features provided by the mobile radio. Hence, the features of long distance communications by means of the mobile radio can be easily adapted by modifying the mobile radio or by replacing the mobile radio by another mobile radio. In this way, the features of this communication channel can be easily adapted without complex changes of a firmly installed radio hardware.

Further to this, a user may easily detach the mobile radio from the mounting device and use the mobile radio as a stand-alone device. In this way, the user can remove the mobile radio from the mounting device and move around. Consequently, the usage of the mobile radio is not limited to a use inside the vehicle. Moreover, the mobile radio can be also used more flexible as an independent device.

The mobile radio may be any kind of radio, which may be used as a mobile, in particular portable or handheld device. For coupling the mobile radio with the vehicle communication arrangement, the mobile radio may comprise one or more appropriate terminals for establishing the required connections. For example, the mobile radio may comprise connectors for coupling one or more external antennas with the mobile radio. Additionally or alternatively, the mobile radio may comprise further interfaces for establishing further connections with the vehicle communication arrangement. For example, a data connection between the mobile radio and the vehicle communication arrangement may be established. Furthermore, voice signals may be transmitted between the mobile radio and the vehicle communication arrangement by analogue or digital signals.

The mobile radio may be coupled with the vehicle communication arrangement by one or more electrically connections. In particular, appropriate connectors for connecting one or more external antennas with the mobile radio may be provided. However, some connections, for example voice or data connections, may be also established by means of a wireless communication between the mobile radio and the vehicle communication arrangement. For example, a WiFi or Bluetooth communication may be established between the mobile radio and the vehicle communication arrangement. However, it is understood, that any other kind of connection or communication may be also possible.

The mounting device may provide an appropriate connecting device for electrically coupling the mobile radio with further components of the vehicle, in particular the vehicle communication arrangement. As already mentioned above, the mobile radio may be coupled with one or more external antennas, for example, antennas installed in the vehicle or connected with the vehicle communication arrangement. Furthermore, the mounting device, in particular the connecting device may provide a connector for power supply of the mobile radio. In this way, it is possible to power the mobile radio by an external power source. Hence, it is not necessary to use an internal power source, for example a battery, of the mobile radio when operating the mobile radio. Furthermore, it may be possible to charge a battery of the mobile radio, when the mobile radio is connected with an external power source. Furthermore, the mounting device may comprise any kind of appropriate elements for receiving and fastening the mobile radio. In particular, the mounting device may comprise elements for manually or automatically locking the mobile radio in the mounting device. In this way, it can be ensured that the mobile radio will not drop out of the mounting device, for example, when the vehicle is moving.

The connecting device of the mounting device may be arranged such that the required connections between the connecting device and the mobile radio are established automatically when inserting the mobile radio in the mounting device.

The vehicle communication arrangement may comprise any kind of elements for establishing communications inside the vehicle or in a proximity of the vehicle. The vehicle communication arrangement may comprise wired and/or wireless communication links. For example, the vehicle communication arrangement may comprise one or more terminals for voice communications. For this purpose, each terminal may comprise a microphone, a loudspeaker, a headset or the like. Furthermore, the vehicle communication arrangement may also establish data communication. For example, the data may be transmitted between individual terminals or other devices dealing with data. The data communication may be performed, for example, by wired data connections or by wireless communication channels, for example, WiFi, Bluetooth, etc. The vehicle communication arrangement may comprise a data network such as an ad-hoc network. The vehicle communication arrangement may comprise a mesh network such as a tactical mesh network (TMSEH) or the like. However, it is understood, that the vehicle communication arrangement is not limited to the above-mentioned examples. Moreover, any other kind of terminal for voice or data communication may be possible, too.

Furthermore, the vehicle communication arrangement may comprise one or more antennas for emitting and/or receiving wireless signals. For example, the antennas may relate to antennas of a Global Navigation Satellite System (GNSS) such as Global Positioning System (GPS), Galileo, etc. Furthermore, the antennas may relate to antennas for radio frequency communication in any appropriate frequency band such as UHF, VHF or the like. Further, the antennas may also relate to antennas for communications via satellite.

Further embodiments of the present invention are subject-matter of the further sub-claims and of the following description, referring to the drawings.

In a possible embodiment, the vehicle communication arrangement comprises a number of communication units. Each communication unit may be configured to provide output to a user. Additionally or alternatively, each communication unit may receive input from the user.

For example, a communication unit may relate to a communication unit for voice communication. For this purpose, the communication unit may comprise a microphone for receiving voice signals. The received voice signals may be converted to analogue or digital signals, and the analogue or digital signals may be transmitted to a further communication unit or the mobile radio. Further, a communication unit may comprise a loudspeaker or a headphone for outputting audio signal such as speech/voice signals, which are received by the communication unit in analogue or digital form. The communication unit may further comprise any kind of control elements for controlling the communication. For example, a specific user or terminal may be selected for establishing a communication with the specified user or terminal. Furthermore, a communication may be established with multiple communication partners in parallel. However, it is understood that any other kind of communication may be also possible, too.

Furthermore, a communication unit may perform a data communication. For example, data packets may be transmitted to a further communication unit or the mobile radio and/or data packets may be received from the mobile radio or further communication units. For this purpose, the communication unit may be a computer terminal or a mobile radio such as a smartphone or a computer, which is connected to the vehicle communication arrangement by a wired or wireless communication link. However, it is understood, that any other kind of communication terminal may be possible, too.

In a possible embodiment, the communication units may comprise internal communication units. The internal communication units may be communication units arranged in the vehicle. Additionally or alternatively, the communication units may comprise external communication units. The external communication units may be communication units arranged outside the vehicle. In this way, a short range communication in the proximity of the vehicle can be performed.

For example, the vehicle may be a car, truck, ship, airplane or helicopter. Multiple users inside the vehicle may communicate with each other. Accordingly, the vehicle communication arrangement may provide the required infrastructure for such a communication of the individual users inside the vehicle. Furthermore, the vehicle communication arrangement may also provide communication capabilities for users outside the vehicle. For example, communication links to users, further communication terminals, further vehicles or the like may be established. In particular, it may be possible to establish an ad-hoc network such as a mesh network, in particular a tactical mesh network may be established by the vehicle communication arrangement.

In a possible embodiment, the radio communication system comprises a management device. The management device may be comprised by the vehicle communication arrangement. The management device may be configured to remotely control the mobile radio. Additionally or alternatively, the management device may be configured to receive a status information from the mobile radio and to provide the received status information to a user.

By means of such a management device, it is possible to operate the mobile radio remotely. Some elements for operating the mobile radio may be covered by the mounting device. Further it may be difficult to reach the mobile radio as long as the management device is inserted into the mounting device. Thus, it may be useful that the operation of the mobile radio can be performed by means of an additional management device. In particular, it may be even possible to operate the mobile radio at a spatial position away from the position where the mobile radio is located. Accordingly, the mobile radio may be mounted at a position, which is appropriate for connecting the mobile radio to the vehicle communication arrangement without taking into account the necessity for directly operating the mobile radio.

In a possible embodiment, the radio communication system may comprise an amplifier. In particular, the amplifier may be comprised by the vehicle communication arrangement. The amplifier may be configured to amplify a signal output by the mobile radio. Additionally or alternatively, the amplifier may be configured to amplify a signal provided to the mobile radio.

The output power provided by a mobile radio may be limited. In particular, the output power of a mobile radio may be lower than the output power of a stationary device. Accordingly, by providing an additional amplifier, the output signals of the management device may be further amplified. Furthermore, a sensitivity of a mobile radio may be also limited. For example, antennas of a mobile radio may be small in size. Thus, the signals received by such antennas may be also low. Hence, by amplifying the signals provided to the mobile radio and/or amplifying the signals output by the mobile radio, a range of the communication, in particular range for transmitting/receiving radio frequency signals, can be extended. However, it may be also possible to amplify any other kind of signals, for example to amplify audio signals provided by the mobile radio.

In a possible embodiment, the radio communication system may comprise a number of antennas. In particular, the number of antennas may be comprised by the vehicle communication arrangement. Accordingly, the mounting device may be configured to electrically couple the number of antennas with the mobile radio.

For example, the antennas may be antennas of a global navigation satellite system (GNSS) such as GPS or Galileo. Furthermore, the antennas may be any kind of antennas for a wireless communication, in particular for transmitting and receiving radio frequency signals. The antennas may be directional antennas or unidirectional antennas. In particular, the antennas may be antennas for a satellite communication, communication via mobile communication networks such as GSM, UMTS, LTE, 5G or the like. However, any other kind of antenna such as UHF or VHF may be possible, too.

In a possible embodiment, the communication system, in particular the connecting device of the mounting device comprises a connector, which is configured to provide power supply to the mobile radio.

By providing external power supply to the mobile radio, it is possible to operate the radio without internal power supply of the mobile radio, for example by a battery of the mobile radio. Accordingly, the operational time of the mobile radio is not limited by the capacity of the battery of the radio. Moreover, it may be also possible to charge a battery of the mobile radio when the mobile radio is connected to the communication system.

In a possible embodiment, the mounting device may comprise a charging device. The charging device may be configured to receive a battery of the mobile radio and to charge the received battery.

Accordingly, the battery of the mobile radio may be charged as long as the mobile radio is operated by the communication system. For this purpose, the battery may be removed from the mobile radio and charged separately by the charging device.

In a possible embodiment, the communication system may comprise a mobile radio. In particular, the mobile radio may be inserted into the mounting device of the communication system. The mobile radio is configured to establish a wireless communication with one or more remote communication partners. The mobile radio may be further configured to be attached in the mounting device of the radio communication system.

Accordingly, wireless communications, in particular wireless communications over a long distance may be established by means of the communication capabilities of the mobile radio. In particular, the outer shape and the configuration of the terminals of the mobile radio may correspond to the mounting device with the connecting device.

In a possible embodiment, the mobile radio comprises a router. The router may be configured to route data packets received from internal communication devices of the vehicle communication arrangement. The router may also route data packet received by the mobile radio from one or more remote communication partners.

By including the routing capabilities of a data network in the mobile radio, the requirements to the vehicle communication arrangement can be further simplified. In particular, the flexibility of the communication system can be further improved, since the configuration for routing the data packets may be controlled by the mobile radio. Thus, it is only necessary to update the mobile radio in order to configure the routing operations of the whole vehicle communication arrangement.

In a possible embodiment, the router is configured to route data packets of an ad-hoc network. In particular, the router may route data packets of a tactical network such as a tactical mesh network.

By including the routing capabilities of an ad-hoc network into the mobile radio, an ad-hoc network can be easily established by means of only a single device. Thus, no further components such as additional routers or the like are required.

In a possible embodiment, the mobile radio is configured to represent all internal communication partners by a single network address to the one or more remote communication partners.

In particular, the mobile radio may use a different network address for the internal communication partners and further network address for the remote communication partners. In this way, the security of the data communication can be further improved. Furthermore, an attack to internal communication partners from external sources can be prevented.

In a possible embodiment, the mobile radio comprises a cryptographic unit. The cryptographic unit may be configured to encrypt/decrypt data from the vehicle communication arrangement and/or data from the remote communication partner.

Accordingly, a central management of the encryption/decryption is provided by the mobile radio. Thus, it is only necessary to manage the required cryptographic data such as keys or the like, only at a single point. Hence, the security is further improved, since it is not necessary to distribute the relevant key data to the individual users and/or terminals within the vehicle communication arrangement.

In a possible embodiment, the mobile radio is configured to separate a communication of communication partners using unencrypted communication and communication partners using encrypted communication.

For example, the mobile radio may provide separate communication areas or networks for encrypted communication and unencrypted communication. Accordingly, by separating the encrypted and the unencrypted communication into different areas, the security of confidential data or communication can be further improved.

With the present invention it is therefore possible to establish an improved radio communication for a vehicle communication system. In particular, a single mobile radio may be coupled with a vehicle communication arrangement. Thus, the mobile radio may establish all radio communication with external communication partners. For this purpose, a mounting device may be provided for receiving the mobile radio and coupling the mobile radio with the vehicle communication arrangement. Hence, the mobile radio can be fully integrated in the vehicle communication arrangement. Furthermore, the mobile radio can be easily removed from this arrangement and used as a separate device, if necessary.

### BRIEF DESCRIPTION OF THE DRAWINGS

For a more complete understanding of the present invention and advantages thereof, reference is now made to the following description taking in conjunction with the accompanying drawings. The invention is explained in more detail below using exemplary embodiments, which are specified in the schematic figures and the drawings, in which:
- Fig. 1:: shows a schematic diagram of a communication system according to an embodiment;
- Fig. 2:: shows a schematic illustration of a mobile radio as used in an embodiment;
- Fig. 3:: shows a schematic diagram of a mounting device according to an embodiment;
- Fig. 4:: shows a schematic diagram of a vehicle with a communication system according to an embodiment; and
- Fig. 5:: shows a flow diagram illustrating an operation of a method according to an embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawings, same, functionally equivalent and identical operating elements, features and components are provided with same reference signs in each case, unless stated otherwise.

### DETAILED DESCRIPTION OF THE DRAWINGS

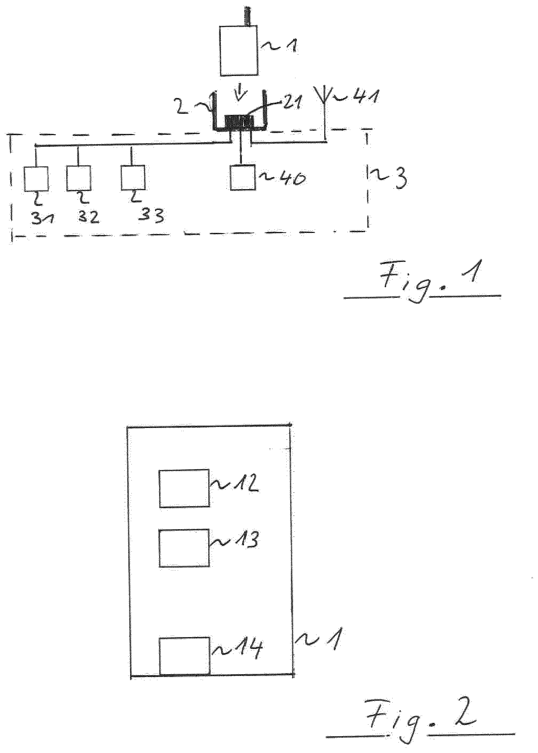

Figure 1 shows a block diagram of an embodiment of a radio communication system. The radio communication system comprises a vehicle communication arrangement 3 and a mounting device 2. Further, the radio communication system may comprise a mobile radio 1. The vehicle communication arrangement 3 may be any kind of appropriate communication system of a vehicle. For example, the vehicle communication arrangement may comprise a number of communication devices 31, 32. The number of communication devices 31, 32 may be communicatively coupled with each other. For example, the communication devices 31, 32 may be connected with each other by wired connections such as cables or the like. However, it may be also possible that at least some communication devices 31, 32 may be connected by a wireless connection. For this purpose, any kind of wireless communication, for example Bluetooth, WiFi etc. may be used. However, it may be also possible that any other kind of communication standard or proprietary communication protocol may be used.

The communication between the numbers of communication devices 31, 32 may comprise a voice communication. For this purpose, the devices 31, 32 may comprise a microphone for receiving voice signals from a user. Further, the terminals may comprise a loudspeaker or headphone for outputting acoustical signals. Additionally, the devices 31, 32 may comprise further elements for processing the signals received by the microphone and the signals to be output by the loudspeaker or headphone. The voice signals may be transmitted between the individual devices 31, 32 by analogue or digital signals.

The vehicle communication arrangement 3 may also provide communication links for data transmission, in particular packet-based data transmission. At least some of the communication devices 31, 32 may comprise processing devices for receiving and/or transmitting data. For example, the respective communication devices 31, 32 may comprise computer terminals, handheld computers such as tablets, Smartphones or any other device for processing digital data.

The above described vehicle communication arrangement 3 provides a communication arrangement for the number of communication devices 31, 32 such that communications may be established between two communication devices 31, 32, respectively. Furthermore, it may be also possible to establish communications between all communication devices 31, 32 in parallel. For example, a message (voice message or data message) may be broadcast from one communication device 31, 32 to all connected communication devices 31, 32. Furthermore, it may be possible to broadcast a message to a number of predetermined communication devices 31, 32 in the vehicle communication arrangement 3. For example, the vehicle communication arrangement 3 may be a communication arrangement such as an intercom system, a mesh network, for example a tactical mesh network (TMSEH) or the like. It is understood, that the present invention is not limited to the before-mentioned communication arrangements. Moreover, any kind of vehicle communication arrangement may be also possible.

Accordingly, by the above described vehicle communication arrangement 3, the individual communication devices 31, 32 may communicate with each other. However, this communication may be limited only to communications within an internal communication network of the vehicle communication arrangement 3. In order to add further communications with external communication partners, an additional radio communication may be added to the vehicle communication arrangement 3. For example, this further additional communication may be performed by a radio, which is coupled to the vehicle communication arrangement 3. In order to achieve high flexibility, a mobile radio 1 may be coupled with the vehicle communication arrangement 3. For this purpose, a mounting device 2 may be provided. The mounting device 2 may comprise an opening or a holder for receiving the mobile radio 1. Optionally, the mounting device 2 may comprise one or more fastening elements (not shown) for fastening the mobile radio 1 in the mounting device 2.

Mounting device 2 may comprise a connecting device 21. Connecting device 21 may correspond to a related connector of the mobile radio 1. Accordingly, when the mobile radio 1 is inserted into the mounting device 2, the connector of the mobile radio 1 is connected to connecting device 21 of the mounting device 2. In this way, mobile radio 1 is electrically coupled with the vehicle communication arrangement 3. For example, an external power source 40 of the mobile communication arrangement 3 may be connected to the mobile radio 1. In this way, the mobile radio 1 may be powered by the power of the external power source 40. Thus, an internal power source of the mobile radio 1, for example a battery, will be not discharged as long as the mobile radio 1 is inserted into the mounting device 2. Furthermore, it may be even possible to charge an internal battery of the mobile radio 1 while the mobile radio 1 is inserted in mounting device 2.

Connector 21 may also provide further connections between mobile radio 1 and the vehicle communication arrangement 3. For example, an external antenna 41 may be connected to mobile radio 1 by appropriate connecting elements of connecting device 21. Additionally or alternatively, signal lines for transmitting voice signals and/or data signals between the mobile radio 1 and the vehicle communication arrangement 3 may be also coupled by connecting device 21 of the mounting device 2.

However, it may be also possible that at least some of the communication between mobile radio 1 and the vehicle communication arrangement 3 may be also realized by a wireless communication. For example, Bluetooth, WiFi or any other wireless communication may be established between mobile radio and vehicle communication arrangement 3. Accordingly, mobile radio 1 may be used by the communication devices 31, 32 of the vehicle communication arrangement 3 in order to establish communications with remote communication partners.

When the mobile radio 1 is connected with the vehicle communication arrangement 3, the mobile radio 1 may be remotely controlled. For example, one or more of the communication devices 31, 32 may control the operation of the mobile radio 1. For example, control commands may be transmitted via the communication links between the communication devices 31, 32 and mobile radio 1. However, it may be also possible to establish a separate wired or wireless communication link in order to control the mobile radio 1. The control of the mobile radio 1 may comprise a transmission of control commands to the mobile radio 1. In this way, one or more parameters of the mobile radio 1 may be set. Furthermore, it may be also possible to receive status information of the mobile radio 1. In this way, the configuration or the operation of the mobile radio 1 may be monitored. The controlling of the mobile radio 1 may be performed, for example, by a management device 33. This management device 33 may be included in one or more of the communication devices 31, 32. However, it may be also possible to provide a separate management device 33 for remotely controlling the mobile radio 1. Accordingly, it is possible to control the mobile radio 1 even if the mobile radio 1 is located at a spatial position, which cannot be directly reached by a user. Furthermore, the mobile radio 1 can be operated even if some of the elements for operating the mobile radio 1 are covered by mounting device 2.

Figure 2 shows a schematic illustration of a mobile radio 1 according to an embodiment. Mobile radio 1 may be any kind of mobile radio for establishing a wireless communication, in particular a wireless communication via a radio frequency link. For example, mobile radio 1 may be a portable or handheld radio. Mobile radio 1 may perform any kind of wireless communication. For example, mobile radio 1 may comprise a transceiver for transmitting radio frequency signals and receiving radio frequency signals. Mobile radio 1 may transmit and/or receive wireless signals of a voice communication. Additionally or alternatively, mobile radio 1 may transmit/receive wireless signals of a data transmission, in particular a packet-based data transmission. The wireless transmission may be a directed radio frequency transmission to a specific communication partner. Alternatively, it may be also possible to perform an undirected transmission/reception of radio frequency signals.

Mobile radio 1 may perform any kind of radio frequency communication. For example, mobile radio 1 may perform a wireless communication in a mobile communication network such as GSM, UMTS, LTE, 5G or the like. Furthermore, mobile radio 1 may perform a satellite based communication or communication in a UHF or VHF frequency band. However, it is understood, that any other kind of radio frequency communication may be possible, too.

Furthermore, mobile radio 1 may comprise one or more receivers for any kind of radio frequency services. For example, mobile radio 1 may comprise a receiver for a global navigation satellite system such as GPS, Galileo or the like for determining a spatial position of mobile radio 1. However, any other kind of services may be also operated.

In case that mobile radio 1 deals with a data transmission, in particular a packet-based data transmission, mobile radio 1 may comprise a router 12. Router 12 may provide routing services for routing data packets from a source node to a target node. For example, each data packet may include a specific address, and router 12 may determine an appropriate route through a data network such that the data packet is transmitted from the source node to the target node. In particular, router 12 may provide routing services for routing data packets between the communication devices of the vehicle communication arrangement 3 and a remote node wherein a connection to the remote node is established via the mobile radio 1. In this way, a data connection between the local network of the vehicle communication arrangement 3 and the remote network can be established.

In order to further improve the security, router 12 may provide an appropriate separation between the remote network and the local network of the vehicle communication arrangement 3. For example, router 12 may provide only a single common network address to the remote network. Accordingly, the individual network nodes of the local network of the vehicle communication arrangement 3 are not visible and not directly accessible by the remote network.

Mobile radio 1 may further comprise a cryptographic unit 13. Cryptographic unit 13 may encode data and decode encoded data. For example, cryptographic unit 13 may encode data before the data are transmitted to a remote communication partner by mobile radio 1. In the same manner, mobile radio 1 may receive encoded data from a remote communication partner and decode the data before forwarding the data to vehicle communication arrangement 3. However, it may be also possible to forward the data to vehicle communication arrangement 3 in an encoded manner. For example, different encryption keys may be used for the local vehicle communication arrangement 3 and for the transmission to remote communication partners. Accordingly, the change of the encryption may be also performed by cryptographic unit 13. Furthermore, cryptographic unit 13 may even use different encryption keys for individual communication devices 31, 32 of the vehicle communication arrangement 3.

In case that at least part of the communication is performed without encryption and a further part of the communication is performed with encryption, mobile radio 1 may control the communication such that the unencrypted communication is separated from the encrypted communication. For example, the local communication within the vehicle communication arrangement 3 may be performed without encryption, and the communication to remote communication partners via mobile radio 1 may be performed with encryption. Accordingly, mobile radio 1 may separate the communication to the remote communication partners and the communication within the vehicle communication arrangement 3.

As can be further seen in Figure 2, mobile radio 1 may comprise a local energy source such as a battery 14. Hence, mobile radio 1 may be powered by this battery 14 if the mobile radio 1 is detached from mounting device 2. If mobile radio 1 is inserted in mounting device 2, mobile radio 1 may be provided with power from a power source of the vehicle, in particular the vehicle communication arrangement 3. Accordingly, battery 14 will be not further discharged during the operation when mobile radio 1 is inserted in mounting device 2. Furthermore, it may be even possible to charge battery 14 during the time when mobile radio 1 is inserted into mounting device 2. Alternatively, it may be possible to detach an attachable battery 14 when the mobile radio 1 is inserted into mounting device 2.

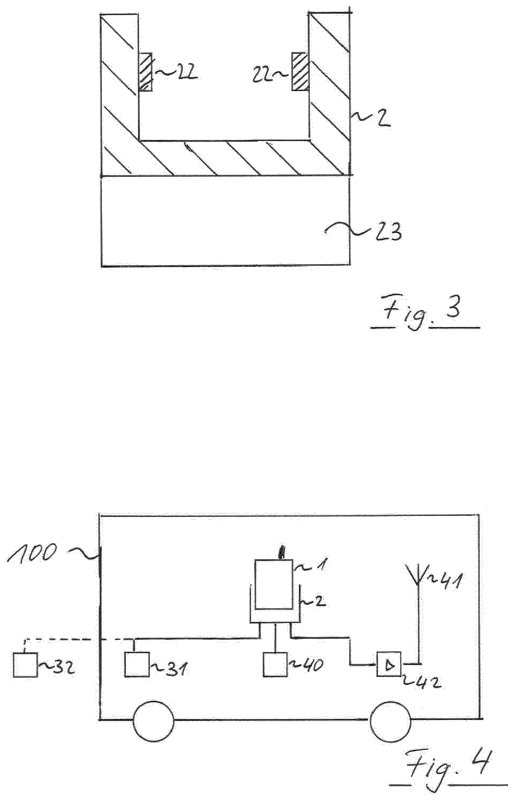

Figure 3 shows a schematic diagram of a mounting device 2 according to an embodiment. Mounting device 2 may comprise an opening, which is adapted to the outer shape of a mobile radio 1, which shall be inserted into mounting device 2. Further, mounting device 2 may comprise one or more fastening elements 22 for securely fastening mobile radio 1 in the mounting device 2. The fastening elements 22 may be operated manually. Alternatively, it may be possible that fastening elements 22 automatically fasten the mobile radio 1, when the mobile radio 1 is inserted in the opening of mounting device 2.

As already mentioned above, mounting device 2 may comprise a connecting device 21. Connecting device 21 may establish one or more electrically connections with corresponding connectors of mobile radio 1. For example, a power supply of mobile radio 1 may be established by connecting device 21. Furthermore, antenna signals may be provided to mobile radio 1 by connecting device 21. However, any further connection, for example a connection of signal lines for voice communication or data communication may be also established by connecting device.

Optionally, mounting device 2 may further comprise a charging device 23. Charging device 23 may receive a battery of mobile radio 1. For example, mobile radio 1 may comprise a detachable battery 14. Accordingly, the detachable battery 14 of the mobile radio 1 may be detached from mobile radio 1 and inserted into charging device 23. In this way, charging device 23 may charge battery 14 of mobile radio 1. In particular, the charging of battery 14 may be performed independent of the operation of mobile radio 1.

Figure 4 shows a schematic block diagram of a vehicle 100 with a radio communication system according to an embodiment. Vehicle 100 may be any kind of vehicle, for example a car, a truck, a ship, an airplane or a helicopter. However, any further kind of vehicle may be possible, too. As already mentioned above, vehicle 100 may comprise a vehicle communication arrangement 3. Vehicle communication arrangement 3 may comprise one or more internal communication devices 31. For example, vehicle communication arrangement 3 may comprise an intercom device for a communication of multiple users within the vehicle. Furthermore, vehicle communication arrangement 3 may also comprise one or more external communication devices 32, which may be located outside the vehicle 100. For example, the external communication devices 32 may be wirelessly connected. As an example, a tablet computer or the like may be connected to the vehicle communication arrangement 3 by a Bluetooth or WiFi connection. However, it is understood, that any other kind of communication link may be possible, too.

The vehicle communication arrangement 3 may be connected to a mobile radio 1 via the above described mounting device 2. Accordingly, any appropriate mobile radio 1 may be inserted into mounting device 2 for establishing communication with one or more remote communication partners. Since the transmission power and/or the sensitivity of internal antennas of the mobile radio 1 may be limited, it may be possible to connect one or more external antennas 41 to the mobile radio 1. In particular, the connection between the external antennas 41 and the mobile radio 1 may be established by the connecting device 21 of mounting device 2. Furthermore, the received and/or transmitted signals may be further amplified by an amplifier 42. In particular, it may be possible to use multiple antennas 41, for example different antennas for different frequency ranges or different directions. Accordingly, individual, separate amplifiers 42 may be provided for each antenna and/or frequency channel.

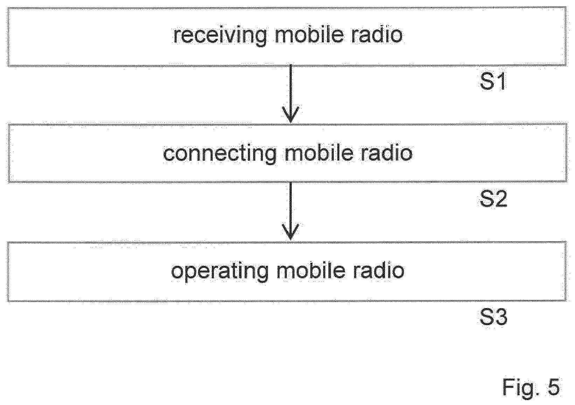

Figure 5 shows a flow diagram of a method for operating a mobile radio 1 in a vehicle communication arrangement 3. The method may comprise any step, which has been already described above in connection with the radio communication system. Accordingly, the radio communication system, which has been described above may comprise any kind of element for realizing the operation which will be described below.

In a step S1, a mobile radio 1 is received by a mounting device 2. In a step S2, the mobile radio 1 is connected electrically with a vehicle communication arrangement 3. In a step S3, the mobile radio 1 is operated by the vehicle communication arrangement 3.

Summarizing, the present invention relates to a radio communication system for a vehicle. A local vehicle communication arrangement of a vehicle may be expanded by including a mobile radio. For this purpose, a mounting device is provided, which can easily receive the mobile radio. The mounting device couples a mobile radio with the local vehicle communication arrangement. In this way, the vehicle communication arrangement as a whole can use the features and the communication capability of the mobile radio.

### List of reference signs

- 1: mobile radio
- 2: mounting device
- 3: vehicle communication arrangement

- 12: router
- 13: cryptographic unit
- 14: battery

- 21: connecting device
- 22: fastening elements
- 23: charging device

- 31, 32: communication units
- 33: managing device

- 40: power supply
- 41: antenna
- 42: amplifier

- 100: vehicle

## Claims

1. Radio communication system for a vehicle, comprising:
a vehicle communication arrangement (3) configured to provide communications inside and/or in a vicinity of the vehicle;
a mounting device (2) configured to receive and fasten a mobile radio (1),
wherein the mounting device (2) comprises a connecting device (21) configured to electrically couple the mobile radio (1) with the vehicle communication arrangement (3).

2. Radio communication system according to claim 1, wherein the vehicle communication arrangement (3) comprises a number of communication units (31, 32), each communication unit (31, 32) is configured to provide an output to a user and/or receive an input from the user.

3. Radio communication system according to claim 2, wherein the number communication units (31, 32) comprise internal communication units (31) arranged inside the vehicle and/or external communication units (32) arranged outside the vehicle.

4. Radio communication system according to any of claims 1 to 3, comprising a management device (33) configured to remotely control the mobile radio (1) and/or to receive status information from the mobile radio (1) and provide the received information to a user.

5. Radio communication system according to any of claims 1 to 4, comprising a number of antennas (41), wherein the mounting device (2) is configured to electrically couple the number of antennas (41) with the mobile radio (1).

6. Radio communication system according to any of claims 1 to 5, comprising an amplifier (42) configured to amplify a signal output by the mobile radio (1) and/or to amplify a signal provided to the mobile radio (1).

7. Radio communication system according to any of claims 1 to 6, wherein the connecting device (21) comprises a connector configured to provide power supply to the mobile radio (1) .

8. Radio communication system according to according to any of claims 1 to 7, wherein the mounting device (2) comprises a charging device (23) configured to receive a battery (14) of the mobile radio (1) and to charge the received battery (14).

9. Radio communication system according to any of claims 1 to 8, comprising a mobile radio (1),
the mobile radio (1) is configured to establish a wireless communication with one or more remote communication partners, and the mobile radio (1) is configured to be attached in the mounting device (2 of the radio communication system.

10. Radio communication system according to claim 9, wherein the mobile radio (1) comprises a router (12) configured to route data packets received from communication units (31, 32) of the vehicle communication arrangement (3 and data packets from one or more remote communication partners.

11. Radio communication system according to claim 10, wherein the router (12) is configured to route data packets of an ad-hoc network, in particular data packets of a tactical network.

12. Radio communication system according to any of claims 9 to 11, wherein mobile radio (1) is configured to represent the communication units (31, 32) on the vehicle communication arrangement (3) by a common address to the one or more remote communication partners.

13. Radio communication system according to any of claims 9 to 12, wherein the mobile radio (1) comprises a cryptographic unit (13) configured to encrypt/decrypt data from the vehicle communication arrangement (3) and/or data from a remote communication partner.

14. Radio communication system according to any of claims 9 to 13, wherein the mobile radio (1) is configured to separate a communication of communication partners using an unencrypted communication and communication partners using an encrypted communication.

15. Method for operating a mobile radio (1) in a vehicle communication arrangement (3), the method comprising:
receiving (S1) the mobile radio (1) in a mounting device (2),
electrically connecting (S2) the mobile radio (1) with the vehicle communication arrangement (3); and
operating (S3) the mobile radio (1) by the vehicle communication arrangement (3).
